(19) Europäisches Patentamt / European Patent Office / Office européen des brevets

(11) EP 2 945 308 B1

(12) EUROPEAN PATENT SPECIFICATION

(45) Date of publication and mention of the grant of the patent:
16.05.2018 Bulletin 2018/20

(51) Int Cl.:
H04B 7/0417 (2017.01)
H04B 7/06 (2006.01)
H04W 88/08 (2009.01)
H04L 5/00 (2006.01)
H04B 7/04 (2017.01)
H04L 25/03 (2006.01)
H04L 1/00 (2006.01)

(21) Application number: 15167050.2

(22) Date of filing: 26.08.2010

(54) **METHOD AND SYSTEM FOR PRECODING**

VERFAHREN UND SYSTEM ZUR VORCODIERUNG

PROCÉDÉ ET SYSTÈME POUR UN PRÉCODAGE

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(43) Date of publication of application:
18.11.2015 Bulletin 2015/47

(62) Document number(s) of the earlier application(s) in accordance with Art. 76 EPC:
10856290.1 / 2 594 030

(73) Proprietor: Huawei Technologies Co., Ltd.
Longgang District
Shenzhen, Guangdong 518129 (CN)

(72) Inventors:
• Mazzarese, David
100082 Beijing (CN)
• Zhou, Yongxing
518129 Guangdong (CN)

(74) Representative: Goddar, Heinz J.
Boehmert & Boehmert
Anwaltspartnerschaft mbB
Pettenkoferstrasse 22
80336 München (DE)

(56) References cited:
WO-A1-2009/096708

• SAMSUNG: "A feedback framework based on W2W1 for Rel. 10", 3GPP DRAFT; R1-103664 FEEDBACK FRAMEWORK_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628 - 20100702, 24 June 2010 (2010-06-24), XP050598508,
• HUAWEI: "Double codebook based Differential feedback for MU-MIMO enhancement", 3GPP DRAFT; R1-103449 DOUBLE CODEBOOK BASED DIFFERENTIAL FEEDBACK FOR MU-MIMO ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050448975,
• HUAWEI: "Extensions to Rel-8 type CQI/PMI/RI feedback using double codebook structure", 3GPP DRAFT; R1-100251 EXTENSIONS TO REL-8 CQIPMIRI FEEDBACK USING DOUBLE CODEBOOK STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417935,

- NOKIA ET AL: "Double codebook performance evaluation", 3GPP DRAFT; R1-103805, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 23 June 2010 (2010-06-23), XP050449424,

**Description**

**Field of the Invention**

The present invention relates to communication technology, and in particular to a method and system for precoding.

**Background of the Invention**

In MIMO OFDMA cellular systems, closed-loop MIMO precoding is defined to enable high throughput downlink transmission to fixed and nomadic users. Feedback information is obtained by the transmitter via the report of a precoding matrix index (PMI) from a receiver to a transmitter. This PMI is used to represent a matrix in a codebook (a set of matrices), and the PMI is used by the transmitter to derive a downlink precoder.

Simple codebook structures are used in the first generation of MIMO OFDMA systems, such that the PMI can be represented with a few bits. Small codebooks can be used to achieve a coarse quantization of the spatial channel. For example, a 4-bit codebook is defined and the 4-bit PMI can be reported via a capacity-limited feedback channel called PUCCH [1,2]. Precoding matrices are defined for each possible transmission rank, which determines the size of the precoding matrix. The overall codebook is a set of matrices for each rank. The feedback report thus consists of a rank indication (RI) and a PMI in the codebook subset of the given rank RI. Since the rank of the propagation channel varies slowly in comparison with fast fading over which the PMI is adapted, the rank indication is reported with a longer period than the PMI.

Since the rank indication remains valid during several reports of the PMI, it can be encoded with a better error protection code in order to ensure that consecutive PMI reports are not invalidated by one erroneous RI report. In general, this is naturally ensured by the fact that the rank can take values in a limited range, such as {1, 2, 3, 4} in LTE (Long Term Evolution) system Rel-8, due to the limitation to a maximum of 4 antennas at the transmitter and 4 antennas at the receiver. Thus the RI can be represented by 2 bits. Since the PMI is in general reported along with a channel quality indication (CQI),which is short for CQI that represents the channel quality assuming that the transmitter precodes with the reported PMI, the total size of the feedback message that contains the PMI+CQI is larger than the 4 bits used to represent just the PMI. For example, in LTE Rel-8, the message size will be 8 to 11 bits with one to two CQIs, respectively. The PUCCH is transmitted in a fixed-size time-frequency resource with a fixed modulation. The 2 bits of RI that are reported individually are better protected than the 8 or 11 bits of PMI and CQI that are jointly reported, since the 2 bits of RI enjoy a lower error-correction encoding rate.

WO 2009/096708 A1 discloses that channel information for precoding can be obtained using a sounding channel, a codebook, channel quantization, etc. Feedback data transmitted from a UE to a BS may include CQI, PMI, and RI. A method includes selecting M subbands from a whole frequency band, and transmitting a first precoding matrix indicator for M subbands and a second PMI for the remaining band, wherein the first PMI is a PMI of a codebook selected from a first codebook set including a plurality of codebooks and the second PMI is a PMI of a codebook selected form a second codebook set including a part of the plurality of codebooks of the first codebook set.

SAMSUNG "A feedback framework based on W2W1 for Rel. 10", 3GPP draft RI-103664 discloses that two codebooks need to be designed. A report can contain both $W_1$ and $W_2$, and a precoder W is derived from $W_1$ and $W_2$. The precoder W for subband can be built as $W=W_2W_1$, and $W_1$ can be a precoding matrix as defined in an implicit feedback. $W_1$ may represent a wideband and $W_2$ may represent a subband. $W_1$ is from a codebook $C_1$ and $W_2$ is from a codebook $C_2$.

HUAWEI: "Double codebook based different feedback for MU-MIMO enhancement", 3GPP draft R1-103449 discloses a precoding matrix $W=W_1W_2$ and/or $W=W_2W_1$, wherein $W_1$ is wideband from the Rel-8 4Tx codebook, and $W_2$ is subband and is a diagonal matrix from a codebook. Based on a PUCCH reporting mode 2-1 it is determined that the matrix index for $W_2$ was added in a subband CQI report. A periodic feedback of the first and second matrix indices in the same report include subband PMI and subband CQI for each subband, and all subbands are reported. An overhead of the PUCCH report includes a subset of $W_1$ (1 bit), a wideband report (remaining 3bits for subset of $W_1$) and a subband report (2 bits for $W_2$).

**Summary of the Invention**

The present invention provides a method of claims 1 and 11, a user equipment of claim 6, a transmitter of claim 7 and a computer program product of claim 15 and 16. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

**Brief Description of the Drawings**

Fig. 1 shows a flowchart of a method for precoding in an embodiment of the present invention;
Fig. 2 shows a flowchart of a method for precoding in another embodiment of the invention;
Fig. 3 shows a flowchart of a method for precoding in another embodiment of the invention;
Fig. 4 shows a user equipment in an embodiment of the invention;
Fig. 5 shows a transmitter in an embodiment of the invention;
Fig. 6 shows a flowchart of a method for precoding in an embodiment of the present invention; and
Fig. 7 shows a system in an embodiment of the invention.

## Detailed Description of the Embodiments

Embodiments of the present invention relates to a method for reporting multiple quantized representation of the channel state information of the propagation channel in a capacity-limited feedback channel using a double codebook structure. The wireless communication system comprises at least one transmitter and at least one receiver. The transmitter may be configured in an network entity, such as a base station, an eNodeB or an access point. The receiver may be configured in a user euipment (UE), such as a mobile device, a cellular telephone, a wireless enabled personal digital assitant (PDA) a wireless enalcd laptop computer, or other such devices. At least one reference signal to the receiver and a feedback channel from the reciever allow the transmission from the transmitter using codebook-based precoding when the transmitter is equipped with multiple transmit antennas.

For high-throughput operation in MIMO OFDMA systems, such as LTE system, IEEE 802.16e/m system or other such systems, a receiver may be asked to feedback one PMI for each subband of the bandwidth of the system, since it offers a better granularity than a wideband precoder and allows the transmitter to adapt its precoder to the frequency-selectivity of the wireless propagation channel, as well as providing information for multiuser diversity scheduling. In order to take advantage of these properties while limiting the rate of feedback in the channel to acceptable level, a receiver may be asked to report the PMIs for a set of selected subbands that do not span the entire bandwidth of operation. Additionally, in order to ensure a smooth operation of the scheduler at the transmitter, it is often also required that the receiver reports a wideband PMI along with the subband PMIs of selected subbands, so that the transmitter has channel state information for scheduling that receiver in any of the subbands for which a subband PMI is not reported. As pointed out above, a CQI is reported in association with a PMI, so a wideband CQI is reported along the wideband PMI, while a subband CQI is reported for each of the subband PMIs.

Enhancements of the feedback for closed-loop precoding beyond the simple 4-bit codebook or antenna array sizes for larger transmission would require more complex codebook structures, as well as a larger codebook size. A first type of enhanced codebook contains matrices that provide a quantization of the MIMO propagation channel between an array of transmitting antennas and an array of receiving antennas as presented in [3], where the matrices take the form:

$$\mathbf{W} = \mathbf{W}_{MI1}^{(1)} \mathbf{W}_{MI2}^{(2)}$$

The inner precoder $\mathbf{W}_{MI1}^{(1)}$ has a block diagonal structure

$$\mathbf{W}_{MI1}^{(1)} = \begin{bmatrix} \widetilde{\mathbf{W}}_{MI1}^{(1)} & 0 \\ 0 & \widetilde{\mathbf{W}}_{MI1}^{(1)} \end{bmatrix}$$

For rank 1, the precoder could be formed as

$$\mathbf{W} = \begin{bmatrix} \widetilde{\mathbf{W}}_{MI1}^{(1)} & 0 \\ 0 & \widetilde{\mathbf{W}}_{MI1}^{(1)} \end{bmatrix} \begin{bmatrix} 1 \\ \alpha \end{bmatrix}, \quad \alpha \in \{1, -1, j, -j\}$$

The rank 2 case would follow similarly as

$$\mathbf{W} = \begin{bmatrix} \widetilde{\mathbf{W}}_{MI1}^{(1)} & 0 \\ 0 & \widetilde{\mathbf{W}}_{MI1}^{(1)} \end{bmatrix} \begin{bmatrix} 1 & 1 \\ \alpha & -\alpha \end{bmatrix}, \quad \alpha \in \{1, j\}$$

The second matrix represents a co-phasing factor that reflects short-term channel variations and can be made to adjust the structure of the overall precoder W to match either a single-polarized linear uniform array (ULA) or a cross-polarized array at the transmitter.

The embodiments of the invention described herein may be used for various broadband wireless communication systems where a double codebook of precoding matrices is known by a transmitter and a receiver and the transmitter is equipped with multiple antennas, some of which may have the same or different polarizations. And the codebook is used for sending feedback information from the receiver to the transmitter via a capacity-limited feedback channel. A double codebook is composed of two codebooks, which are sets of matrices, and the combination of one matrix from a first codebook $C_1$ and one matrix from a second codebook $C_2$ forms a precoder that can be used by the transmitter to send data to a receiver via multiple transmit antennas.

In an embodiment, a receiver, which can be UE, is connected to a transmitter ,which can be an access point for a duration much longer than the transmission time interval. During this duration, the receiver would send several feedback reports containing indices in a double codebook to recommend one or several precoders to the transmitter.

In one embodiment, at least one message including a rank indication, a first codebook index $n_1$ in a first codebook $C_1$, and two codebook indices $k_1$ and $k_2$ in a second codebook $C_2$, which is contained in at least one report, is fed back from the receiver to the transmitter. The indices $(n_1, k_1)$ represent a wideband precoder $W_1$ in the double codebook, while the indices $(n_1, k_2)$ represent a subband precoder $W_2$ in the double codebook, based on the same matrix with index $n_1$ in the codebook $C_1$. A wideband channel quality indicator , that is CQI, is also reported in reference to the wideband precoder represented by $(n_1, k_1)$, while a subband channel quality indicator (CQI) is also reported in reference to the subband precoder represented by $(n_1, k_2)$.

In some embodiments where the index $k_1$ is not reported, it is assumed to be pre-defined with a common assumption known by both the receiver and the transmiter.

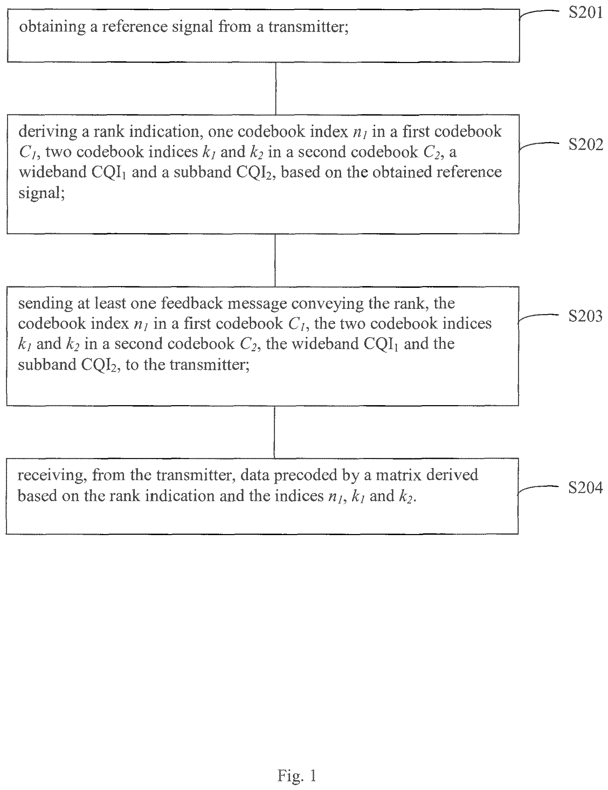

In an embodiment, a method for precoding feedback in a wireless communication system is disclosed. Referring to Figure 1, including:

S201. Obtaining, by a user equipment, a reference signal from a transmitter;
S202. Deriving, by the user equipment, a rank indication, a first codebook index $n_1$ in a first codebook $C_1$, two codebook indices $k_1$ and $k_2$ in a second codebook $C_2$, a wideband $CQI_1$ associated with a wideband precoding matrix represented by indices $(n_1, k_1)$, and a subband $CQI_2$ associated with a subband precoding matrix represented by indices $(n_1, k_2)$, based on the obtained reference signal;
S203, sending, by the user equipment, a feedback report conveying the rank indication, the first codebook index $n_1$, the two codebook indices $k_1$ and $k_2$, the wideband $CQI_1$, and the subband $CQI_2$, to the transmitter ; and
S204, receiving, by the user equipment from the transmitter, data precoded by a first precoder determined by the transmitter based on the rank indication and the indices $n_1$, $k_1$ and $k_2$.

In one embodiment the first precoder determined by the transmitter based on the rank indication and the indices $n_1$, $k_1$ and $k_2$ comprises:

the first precoder is determined by the transmitter based on the rank indication ,a second precoder and a third precoder, wherein the second precoder is determined by the indices $n_1$ and $k_1$ at the transmitter, which represents a wideband precoder, and the third precoder is determined by the indices $n_1$ and $k_2$ at the transmitter ,which represents a subband precoder.
wherein the second precoder is determined by the indices $n_1$ and $k_1$ at the transmitter comprises:

the second precoder is determined as $\mathbf{W} = \mathbf{W}_{n_1}^{(1)}\mathbf{W}_{k_1}^{(2)}$ , and the $\mathbf{W}_{n_1}^{(1)}$ represents the matrix determined by the index $n_1$ in the codebook $C_1$ ,and the $\mathbf{W}_{k_1}^{(2)}$ represents the matrix determined by the index $k_1$ in the codebook $C_2$;
the third precoder is determined by the indices $n_1$ and $k_2$ at the transmitter comprises:
the third precoder is determined as $\mathbf{W} = \mathbf{W}_{n_1}^{(1)}\mathbf{W}_{k_2}^{(2)}$, and the $\mathbf{W}_{n_1}^{(1)}$ represents the matrix determined by the index $n_1$ in the codebook $C_1$, ,and the $\mathbf{W}_{k_2}^{(2)}$ represents the matrix determined by the index $k_2$ in the codebook $C_2$.

In one embodiment the second precoder is determined by the indices $n_1$ and $k_1$ at the transmitter comprises:

the second precoder is determined as $\mathbf{W} = \mathbf{W}_{k_1}^{(2)}\mathbf{W}_{n_1}^{(1)}$ ,' and the $\mathbf{W}_{k_1}^{(2)}$ represents the matrix detennined by the index $k_1$ in the codebook $C_2$ ,and the $\mathbf{W}_{n_1}^{(1)}$ represents the matrix determined by the index $n_1$ in the codebook $C_1$;
the third precoder is determined by the indices $n_1$ and $k_2$ at the transmitter comprises:
the third precoder is determined as $\mathbf{W} = \mathbf{W}_{k_2}^{(2)}\mathbf{W}_{n_1}^{(1)}$ , and the $\mathbf{W}_{k_2}^{(2)}$ represents the matrix determined by the index $k_2$ in the codebook $C_2$ ,and the $\mathbf{W}_{n_1}^{(1)}$ represents the matrix determined by the index $n_1$ in the codebook $C_1$.

The method above allows to reduce the number of reported indices for representing two precoders in a double codebook, and there is no performance impact.

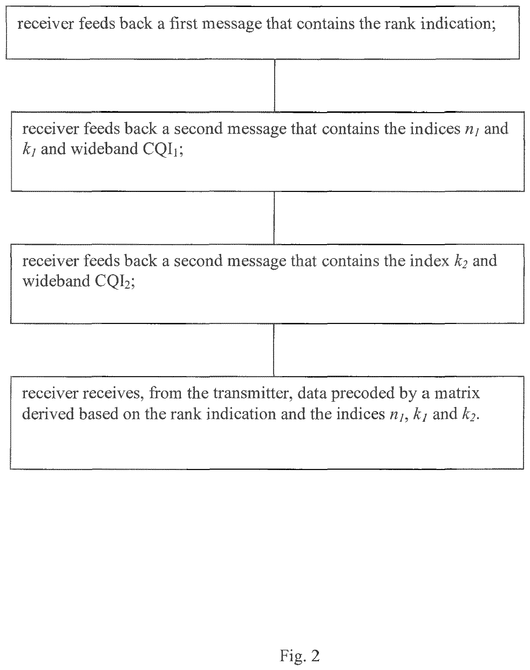

In one embodiment, the transmitter may ask the receiver to feed back in a series of messages as exemplified in figure 2. A first message contains the rank indication. A second message contains the indices $n_1$ and $k_1$ and the wideband channel quality indicator $CQI_1$. A third message contains the index $k_2$ and the subband channel quality indicator CQI2. And the receiver receives, from the transmitter, data precoded by a matrix derived based on the rank indication and the indices n1, k1 and k2.

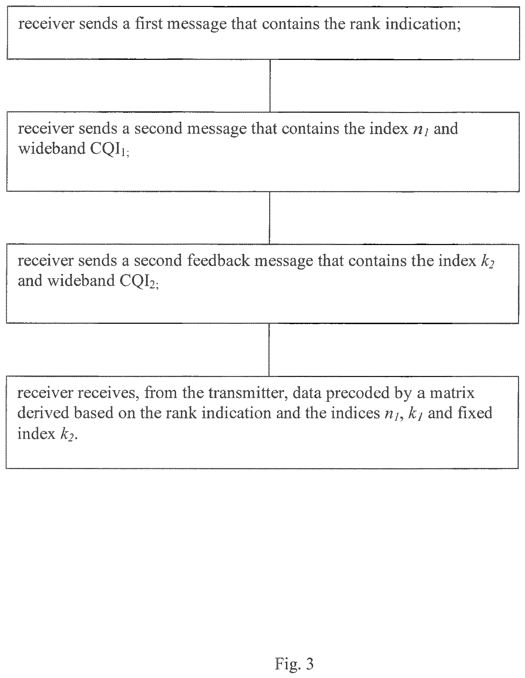

In one embodiment, the transmitter may ask the receiver to feed back in a series of compact messages that can contain one matrix index, as exemplified in figure 3. A first message contains the rank indication. A second message contains the index $n_1$ and the wideband $CQI_1$. A third message contains the index $k_2$ and the subband $CQI_2$. And the index $k_1$ may be implicitly known by both the transmitter and the receiver as a fixed matrix in the codebook $C_2$. And the receiver receives, from the transmitter, data precoded by a matrix derived based on the rank indication and the indices nl, k1 and k2.

In one embodiment, a precoding matrix in the double codebook is derived as $\mathbf{W} = \mathbf{W}^{(2)}\mathbf{W}^{(1)}$, where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{k_1}^{(2)}\mathbf{W}_{n_1}^{(1)}$, while the subband precoder $\mathbf{W}_2$ is derived as $\mathbf{W}_2 = \mathbf{W}_{k_2}^{(2)}\mathbf{W}_{n_1}^{(1)}$. A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment, the index $k_1$ is pre-defined at both the transmitter and receiver based on a fixed assumption, and the matrix which the index $k_1$ represents may be the identity matrix, in which case the wideband precoder is simply represented as $\mathbf{W}_{n_1}^{(1)}$.

In one embodiment, a precoding matrix in the double codebook is derived as $\mathbf{W} = \mathbf{W}^{(1)}\mathbf{W}^{(2)}$, where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$, while the subband precoder $\mathbf{W}_2$ is derived as $\mathbf{W}_2 = \mathbf{W}_{n_1}^{(1)}\mathbf{W}_{k_2}^{(2)}$. A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is pre-defined at both the transmitter and receiver based on a fixed assumption, and the matrix which the index $k_1$ represents may be the identity matrix or a block matrix composed of identity matrices of smaller dimension.

In one embodiment, a precoding matrix in the double codebook is derived as $\mathbf{W} = \mathbf{W}^{(1)}\mathbf{W}^{(2)}$, where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$, while the subband precoder is $\mathbf{W}_2$ derived as $\mathbf{W}_2 = \mathbf{W}_{n_1}^{(1)}\mathbf{W}_{k_2}^{(2)}$. A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is reported based on a subset of the codebook $C_2$, and $k_1$ may be reported with fewer bits than the index $k_2$. For example, $k_2$ is the index in the subset of the codebook $C_2$.

In one embodiment, a precoding matrix in the double codebook is derived as $\mathbf{W} = \mathbf{W}^{(1)}\mathbf{W}^{(2)}$, where $R = \mathbf{W}^{(1)}$ is a normalized covariance matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$, while the subband precoder $\mathbf{W}_2$ is derived as $\mathbf{W}_2 = \mathbf{W}_{n_1}^{(1)}\mathbf{W}_{k_2}^{(2)}$. A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is not reported but it is pre-defined at both the transmitter and receiver based on a common assumption, this matrix which the index $k_1$ represents may be the principal eigenvector of the matrix R, or the best approximation of the principal eigenvector of the matrix R by a vector in the codebook $C_2$.

Note that for skilled person in the art, the embodiment above may be used for at least one subband.

The method above allows to reduce the number of reported indices and save the system resources , without performance reducing.

It is understandable to those skilled in the art that all or part of the steps of the foregoing embodiments may be implemented by hardware instructed by a computer program. The program may be stored in a computer-readable storage medium. When being executed, the program performs all or part of the steps in foregoing method embodiments.

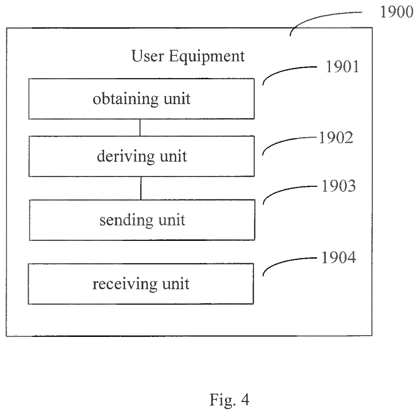

In another embodiment of the present invention, a user equipment that can realize all the above method is also disclosed. Referring to Figure 4 , the user equipment 1900 includes:

a obtaining unit 1901, configured to obtain a reference signal from a transmitter;
a deriving unit 1902, configured to derive a rank indication, a codebook index $n_1$ in a first codebook $C_1$

and codebook indices $k_1$ and $k_2$ in a second codebook $C_2$, a wideband channel quality indicator CQI$_1$ and a subband channel quality indicator CQI$_2$, based on the reference signal obtained by the obtaining unit;,

a sending unit 1903, configured to send the rank indication, the codebook index $n_1$ in the first codebook $C_1$, the codebook indices $k_1$ and $k_2$ in the second codebook $C_2$, the wideband CQI$_1$ and the subband CQI$_2$ derived by the deriving unit, to the transmitter; and

a receiving unit 1904, configured to receive, from the transmittter, the data precoded by a first precoder determined by the transmitter based on the rank indication and the indices $n_1$, $k_1$ and $k_2$.

Note that for skilled person in the art, the embodiment above may be used for at least one subband.

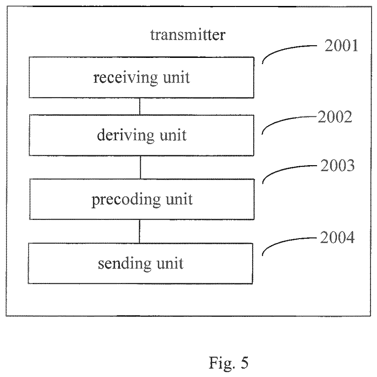

The embodiment above allows to reduce the number of reported indices and save the system resources , without performance reducing.In another embodiment of the present invention,a transmitter is described as figure 5. In this embodiment ,the transmitter may be a base station.

The transmitter, comprising:

a receiving unit 2001, configured to receive a rank indication, a codebook index $n_1$ in a first codebook $C_1$, codebook indices $k_1$ and $k_2$ in a second codebook $C_2$, the wideband channel quality indicator CQI$_1$ and the subband channel quality indicator CQI$_2$ from a user equipment;

a deriving unit 2002, configured to derive a first precoder determined based on the rank indication and the indices $n_1$, $k_1$ and $k_2$ received by the receiving unit 2001; and

a precoding unit 2003, configured to precode the data to be sent to the user equipment by the first precoder derived by the deriving unit 2002;and

a sending unit 2004, configured to send the data precoded by the precoding unit 2003 to the user equipment.

the deriving unit comprising:

a first deriving module, configured to derive a second precoder representing a wideband precoder determined by the indices $n_1$ and $k_1$ ;and

a second deriving module, configured to a third precoder representing a subband precoder determined by the indices $n_1$ and $k_2$.

the deriving unit comprising:

a first deriving module, configured to derive a second precoder representing a wideband precoder determined by the indices $n_1$ and $k_1$ ;and

a second deriving module, configured to a third precoder representing a subband precoder determined by the indices $n_1$ and $k_2$.

the first deriving module comprising:

a first determining submodule, configured to determine the matrix $\mathbf{W}_{n_1}^{(1)}$ by the index $n_1$ in the codebook $C_1$;

a second determining submodule, configured to determine the matrix $\mathbf{W}_{k_1}^{(2)}$ by the index $k_1$ in the codebook $C_2$; and

a third determining submodule, configured to determine the second precoder $\mathbf{W}_1$ as

$$\mathbf{W}_1 = \mathbf{W}_{n_1}^{(1)}\mathbf{W}_{k_1}^{(2)} ;$$

the second deriving module comprising:

a fourth determining submodule, configured to determine the matrix $\mathbf{W}_{n_1}^{(1)}$ by the index $n_1$ in the codebook $C_1$;

a fifth determining submodule, configured to determine the matrix $\mathbf{W}_{k_2}^{(2)}$ by the index $k_2$ in the codebook $C_2$; and

a sixth determining submodule, configured to determine the third precoder $\mathbf{W}_2$ as

$$\mathbf{W}_2 = \mathbf{W}_{n_1}^{(1)}\mathbf{W}_{k_2}^{(2)} ;$$ or,

the first deriving module comprising:

the first determining submodule, configured to determine the matrix $\mathbf{W}_{k_1}^{(2)}$ by the index $k_1$ in the codebook $C_2$;

the second determining submodule, configured to determine the matrix $\mathbf{W}_{n_1}^{(1)}$ by the index $n_1$ in the codebook $C_1$;

the third determining submodule, configured to determine the second precoder $\mathbf{W}_1$

as $\mathbf{W}_1 = \mathbf{W}_{k_1}^{(2)}\mathbf{W}_{n_1}^{(1)} ;$

the second deriving module comprising:

the fourth determining submodule, configured to determine the matrix $\mathbf{W}_{k_2}^{(2)}$ by the index $k_2$ in the codebook $C_2$;

the fifth determining submodule, configured to determine the matrix $\mathbf{W}_{n_1}^{(1)}$ by the index $n_1$ the codebook $C_1$;

sixth determining submodule, configured to determine the third precoder $\mathbf{W}_2$ as

$$\mathbf{W}_2 = \mathbf{W}_{k_2}^{(2)}\mathbf{W}_{n_1}^{(1)}.$$

Note that for skilled person in the art, the embodiment above may be used for at least one subband.

The embodiment above allows to reduce the number of reported indices and save the system resources , without performance reducing.

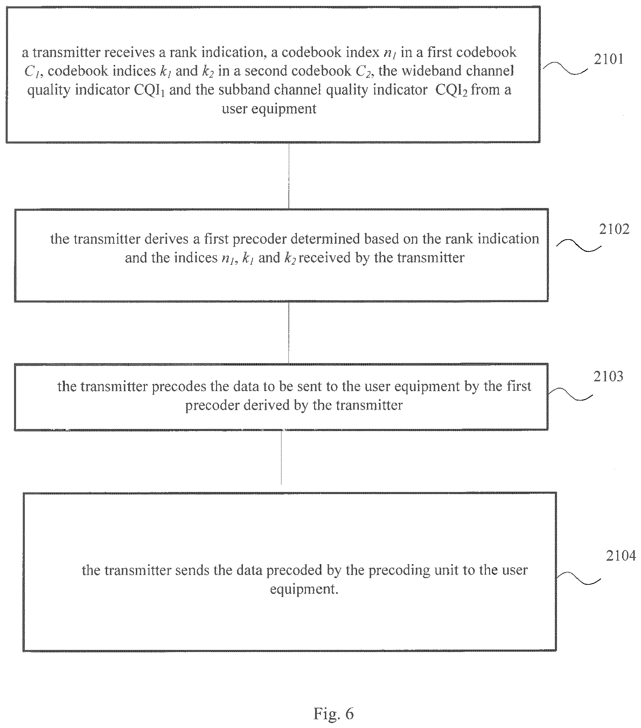

In one embodiment,a method for precoding in a wireless communication system is detailed in figure 6. The method comprise:

S2101, a transmitter receives a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment;

S2102, the transmitter derives a first precoder determined based on the rank indication and the indices $n_1$, $k_1$ and $k_2$ received by the transmitter;

S2103, the transmitter precodes the data to be sent to the user equipment by the first precoder derived by the transmitter; and

S2104, the transmitter sends the data precoded by the precoding unit to the user equipment.

wherein the transmitter deriving a first precoder determined based on the rank indication and the indices $n_1$, $k_1$ and $k_2$ received by the transmitter, comprising:

the transmitter deriving the first precoder determined based on the rank indication ,a second precoder and a third precoder, in which the second precoder is determined by the indices $n_1$ and $k_1$ at the transmitter,which represents a wideband precoder,and the third precoder is determined by the indices $n_1$ and $k_2$ at the transmitter ,which represents a subband precoder.

wherein the second precoder is determined by the indices $n_1$ and $k_1$ at the transmitter comprises:

the second precoder $\mathbf{W}_1$ is determined as

$$\mathbf{W}_1 = \mathbf{W}_{n_1}^{(1)}\mathbf{W}_{k_1}^{(2)},$$ in which the $\mathbf{W}_{n_1}^{(1)}$ represents the matrix determined by the index $n_1$ in the codebook $C_1$ ,and the $\mathbf{W}_{k_1}^{(2)}$ represents the matrix determined by the index $k_1$ in the codebook $C_2$;

the third precoder is determined by the indices $n_1$ and $k_2$ at the transmitter comprises:

the third precoder $\mathbf{W}_2$ is determined as

$$\mathbf{W}_2 = \mathbf{W}_{n_1}^{(1)}\mathbf{W}_{k_2}^{(2)},$$ in which the $\mathbf{W}_{n_1}^{(1)}$ represents the matrix determined by the index $n_1$ in the codebook $C_1$ ,and the $\mathbf{W}_{k_2}^{(2)}$ represents the matrix determined by the index $k_2$ in the codebook $C_2$.

wherein the second precoder is determined by the indices $n_1$ and $k_1$ at the transmitter comprises:

the second precoder $\mathbf{W}_1$ is determined as

$$\mathbf{W}_1 = \mathbf{W}_{k_1}^{(2)}\mathbf{W}_{n_1}^{(1)},$$ in which the $\mathbf{W}_{k_1}^{(2)}$ represents the matrix determined by the index $k_1$ in the codebook $C_2$, and the $\mathbf{W}_{n_1}^{(1)}$ represents the matrix determined by the index $n_1$ in the codebook $C_1$;

the third precoder is determined by the indices $n_1$ and $k_2$ at the transmitter comprises:

the third precoder $\mathbf{W}_2$ is determined as

$$\mathbf{W}_2 = \mathbf{W}_{k_2}^{(2)}\mathbf{W}_{n_1}^{(1)},$$ in which the $\mathbf{W}_{k_2}^{(2)}$ represents the matrix determined by the index $k_2$ in the codebook $C_2$, and the $\mathbf{W}_{n_1}^{(1)}$ represents the matrix determined by the index $n_1$ in the codebook $C_1$.

Note that for skilled person in the art, the embodiment above may be used for at least one subband.

The embodiment above allows to reduce the number of reported indices and save the system resources , without performance reducing.

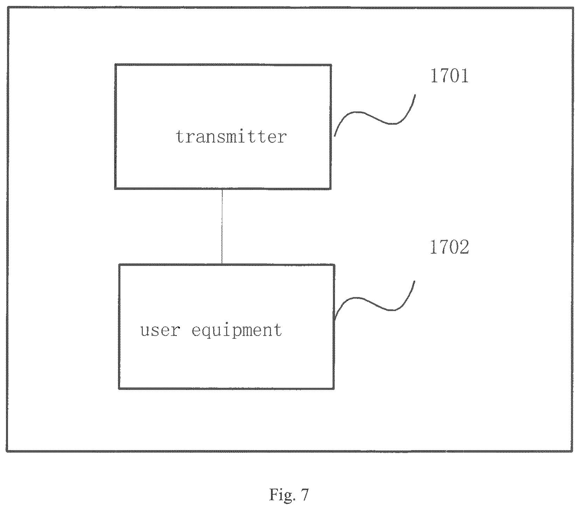

In one embodiment, a system for precoding is detailed in figure 7.The system comprises a transmitter 1701 and a user equipment 1702. The transmitter may be a base station.

The user equipment may comprise a receiving unit, configured to receive a reference signal from a transmitter;

a deriving unit, configured to derive a rank indication, a codebook index $n_1$ in a first codebook $C_1$ and codebook indices $k_1$ and $k_2$ in a second codebook $C_2$, a wideband channel quality indicator $CQI_1$ and a subband channel quality indicator $CQI_2$, based on the reference signal obtained by the receiving unit;,

a sending unit, configured to send the rank indication, the codebook index $n_1$ in the first codebook $C_1$, the codebook indices $k_1$ and $k_2$ in the second codebook $C_2$, the wideband $CQI_1$ and the subband $CQI_2$ derived by the deriving unit, to the transmitter; and

a receiving unit, configured to receive, from the transmitter, the data precoded by a first precoder determined by the transmitter based on the rank indication and the indices $n_1$, $k_1$ and $k_2$

The transmitter may comprise a receiving unit 2001, configured to receive a rank indication, a codebook index $n_1$ in a first codebook $C_1$, codebook indices $k_1$ and $k_2$ in a second codebook $C_{2,}$, the wideband channel quality indicator $CQI_1$ and the subband channel quality indicator $CQI_2$ from a user equipment;

a deriving unit, configured to derive a first precoder determined based on the rank indication and the indices $n_1$, $k_1$ and $k_2$ received by the receiving unit; and

a precoding unit, configured to precode the data to be sent to the user equipment by the first precoder derived by the deriving unit; and

a sending unit, configured to send the data precoded by the precoding unit 2003 to the user equipment.

the deriving unit comprising:

　　a first deriving module, configured to derive a second precoder representing a wideband precoder determined by the indices $n_1$ and $k_1$; and
　　a second deriving module, configured to a third precoder representing a subband precoder determined by the indices $n_1$ and $k_2$.

the deriving unit comprising:

　　a first deriving module, configured to derive a second precoder representing a wideband precoder determined by the indices $n_1$ and $k_1$; and
　　a second deriving module, configured to a third precoder representing a subband precoder determined by the indices $n_1$ and $k_2$.

the first deriving module comprising:

　　a first determining submodule, configured to determine the matrix $\mathbf{W}_{n_1}^{(1)}$ by the index $n_1$ in the codebook $C_{1;}$
　　a second determining submodule, configured to determine the matrix $\mathbf{W}_{k_1}^{(2)}$ by the index $k_1$ in the codebook $C_{2;}$ and
　　a third determining submodule, configured to determine the second precoder $\mathbf{W}_1$ as

$$\mathbf{W}_1 = \mathbf{W}_{n_1}^{(1)}\mathbf{W}_{k_1}^{(2)};$$

the second deriving module comprising:

　　a fourth determining submodule, configured to determine the matrix $\mathbf{W}_{n_1}^{(1)}$ by the index $n_1$ in the codebook $C_{1;}$
　　a fifth determining submodule, configured to determine the matrix $\mathbf{W}_{k_2}^{(2)}$ by the index $k_2$ in the codebook $C_{2;}$ and

　　a sixth determining submodule, configured to determine the third precoder $\mathbf{W}_2$ as $\mathbf{W}_2 = \mathbf{W}_{n_1}^{(1)}\mathbf{W}_{k_2}^{(2)};$ or,

the first deriving module comprising:

　　the first determining submodule, configured to determine the matrix $\mathbf{W}_{k_1}^{(2)}$ by the index $k_1$ in the codebook $C_{2;}$
　　the second determining submodule, configured to determine the matrix $\mathbf{W}_{n_1}^{(1)}$ by the index $n_1$ in the codebook $C_{1;}$
　　the third determining submodule, configured to determine the second precoder $\mathbf{W}_1$ as

$$\mathbf{W}_1 = \mathbf{W}_{k_1}^{(2)}\mathbf{W}_{n_1}^{(1)};$$

the second deriving module comprising:

　　the fourth determining submodule, configured to determine the matrix $\mathbf{W}_{k_2}^{(2)}$ by the index $k_2$ in the codebook $C_{2;}$
　　the fifth determining submodule, configured to determine the matrix $\mathbf{W}_{n_1}^{(1)}$ by the index $n_1$ in the codebook $C_{1;}$
　　sixth determining submodule, configured to determine the third precoder $\mathbf{W}_2$ as

$$\mathbf{W}_2 = \mathbf{W}_{k_2}^{(2)}\mathbf{W}_{n_1}^{(1)}.$$

Note that for skilled person in the art, the embodiment above may be used for at least one subband.

The embodiment above allows to reduce the number of reported indices and save the system resources , without performance reducing.

In an eighth embodiment, a method for precoding in a wireless communication system comprises:

　　obtaining, by a receiver, a reference signal from a transmitter;
　　deriving, by the receiver, a rank indication, a codebook index $n_1$ in a first codebook $C_1$ codebook indices $k_1$ and $k_2$ in a second codebook $C_2$, a wideband channel quality indicator, $CQI_1$, and a subband channel quality indicator, $CQI_2$, based on the obtained reference signal;
　　sending, by the receiver, the rank indication, the codebook index $n_1$ in the first codebook $C_1$, the codebook indices $k_1$ and $k_2$ in the second codebook $C_{2,}$, the wideband $CQI_1$ and the subband $CQI_2$, to the transmitter; and

receiving, by the receiver, data precoded by a first precoder from the transmitter, wherein the first precoder is determined by the transmitter based on the rank indication and the indices $n_1$, $k_1$ and $k_2$.

In a first further development of the method according to the eighth embodiment, the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

In a second further development of the method according to the first further development of the eighth embodiment, the second precoder $\mathbf{W}_1$ is determined as

$$\mathbf{W}_1 = \mathbf{W}_{n_1}^{(1)} \mathbf{W}_{k_1}^{(2)},$$ wherein the $\mathbf{W}_{n_1}^{(1)}$ represents a matrix determined by the index $n_1$ in the codebook $C_1$, and

the $\mathbf{W}_{k_1}^{(2)}$ represents a matrix determined by the index $k_1$ in the codebook $C_2$; and

the third precoder $\mathbf{W}_2$ is determined as

$$\mathbf{W}_2 = \mathbf{W}_{n_1}^{(1)} \mathbf{W}_{k_2}^{(2)},$$ wherein the $\mathbf{W}_{n_1}^{(1)}$ represents a matrix determined by the index $n_1$ in the codebook $C_1$,

and the $\mathbf{W}_{k_2}^{(2)}$ represents a matrix determined by the index $k_2$ in the codebook $C_2$.

In a third further development of the method according to the second further development of the eighth embodiment, the $\mathbf{W}_{k_1}^{(2)}$ is an identity matrix or a block matrix composed of identity matrices of smaller dimension.

In fourth first further development of the method according to the first further development of the eighth embodiment, the second precoder $\mathbf{W}_1$ is determined as

$$\mathbf{W}_1 = \mathbf{W}_{k_1}^{(2)} \mathbf{W}_{n_1}^{(1)},$$ wherein the $\mathbf{W}_{k_1}^{(2)}$ represents a matrix determined by the index $k_1$ in the codebook $C_2$, and

the $\mathbf{W}_{n_1}^{(1)}$ represents a matrix determined by the index $n_1$ in the codebook $C_1$; and

the third precoder $\mathbf{W}_2$ is determined as

$$\mathbf{W}_2 = \mathbf{W}_{k_2}^{(2)} \mathbf{W}_{n_1}^{(1)},$$ wherein the $\mathbf{W}_{k_2}^{(2)}$ represents a matrix determined by the index $k_2$ in the codebook $C_2$, and the $\mathbf{W}_{n_1}^{(1)}$ represents a matrix determined by the index $n_1$ in the codebook $C_1$.

In a fifth further development of the method according to the eighth embodiment, the codebook $C_2$ and codebook $C_1$ are derived by both the transmitter and the receiver.

In a ninth embodiment, a user equipment comprises:

a obtaining unit, configured to obtain a reference signal from a transmitter;
a deriving unit, configured to derive a rank indication, a codebook index $n_1$ in a first codebook $C_1$, codebook indices $k_1$ and $k_2$ in a second codebook $C_2$, a wideband channel quality indicator CQI$_1$ and a subband channel quality indicator CQI$_2$, based on the reference signal obtained by the obtaining unit;
a sending unit, configured to send the rank indication, the codebook index $n_1$ in the first codebook $C_1$, the codebook indices $k_1$ and $k_2$ in the second codebook $C_2$, the wideband CQI$_1$ and the subband CQI$_2$ to the transmitter; and
a receiving unit, configured to receive, from the transmitter, data precoded by a first precoder, wherein the first precoder is determined by the transmitter based on the rank indication and the indices $n_1$, $k_1$ and $k_2$.

In a first further development of the user equipment according to the ninth embodiment, the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

In a tenth embodiment, a transmitter comprises:

a receiving unit, configured to receive a rank indication, a codebook index $n_1$ in a first codebook $C_1$, codebook indices $k_1$ and $k_2$ in a second codebook $C_2$, a wideband channel quality indicator, CQI$_1$, and a subband channel quality indicator. CQI$_2$, from a user equipment;
a deriving unit, configured to derive a first precoder determined based on the rank indication and the indices $n_1$, $k_1$ and $k_2$ received by the receiving unit; and
a precoding unit, configured to precode data to be sent to the user equipment by the first precoder derived by the deriving unit; and
a sending unit, configured to send the data precoded by the precoding unit to the user equipment.

In a first further development of the transmitter according to the tenth embodiment, the deriving unit comprises:

a first deriving module, configured to derive a second precoder representing a wideband precoder determined by the indices $n_1$ and $k_1$; and
a second deriving module, configured to a third precoder representing a subband precoder determined

by the indices $n_1$ and $k_2$.

In a second further development of the transmitter according to the first further development of the tenth embodiment, the first deriving module comprises:

a first determining submodule, configured to determine a matrix $\mathbf{W}_{n_1}^{(1)}$ by the index $n_1$ in the codebook $C_1$;

a second determining submodule, configured to determine a matrix $\mathbf{W}_{k_1}^{(2)}$ by the index $k_1$ in the codebook $C_2$; and

a third determining submodule, configured to determine the second precoder $\mathbf{W}_1$ as

$$\mathbf{W}_1 = \mathbf{W}_{n_1}^{(1)} \mathbf{W}_{k_1}^{(2)};$$ and

the second deriving module comprises:

a fourth determining submodule, configured to determine a matrix $\mathbf{W}_{n_1}^{(1)}$ by the index $n_1$ in the codebook $C_1$;

a fifth determining submodule, configured to determine a matrix $\mathbf{W}_{k_2}^{(2)}$ by the index $k_2$ in the codebook $C_2$; and

a sixth determining submodule, configured to determine the third precoder $\mathbf{W}_2$ as

$$\mathbf{W}_2 = \mathbf{W}_{n_1}^{(1)} \mathbf{W}_{k_2}^{(2)};$$

In a third further development of the transmitter according to the first further development of the tenth embodiment, the first deriving module comprises:

a first determining submodule, configured to determine a matrix $\mathbf{W}_{k_1}^{(2)}$ by the index $k_1$ in the codebook $C_2$;

a second determining submodule, configured to determine a matrix $\mathbf{W}_{n_1}^{(1)}$ by the index $n_1$ in the codebook $C_1$; and

a third determining submodule, configured to determine the second precoder $\mathbf{W}_1$ as

$$\mathbf{W}_1 = \mathbf{W}_{k_1}^{(2)} \mathbf{W}_{n_1}^{(1)};$$ and

the second deriving module comprises:

a fourth determining submodule, configured to determine a matrix $\mathbf{W}_{k_2}^{(2)}$ by the index $k_2$ in the codebook $C_2$;

a fifth determining submodule, configured to determine a matrix $\mathbf{W}_{n_1}^{(1)}$ by the index $n_1$ in the codebook $C_1$; and

a sixth determining submodule, configured to determine the third precoder $\mathbf{W}_2$ as $\mathbf{W}_2 = \mathbf{W}_{k_2}^{(2)} \mathbf{W}_{n_1}^{(1)}$.

In a fourth further development of the transmitter according to the tenth embodiment or the first further development of the tenth embodiment or the second further development of the tenth embodiment or the third further development of the tenth embodiment, the transmitter is a base station.

In an eleventh embodiment, a method for precoding in a wireless communication system comprises:

receiving, by a transmitter, a rank indication, a codebook index $n_1$ in a first codebook $C_1$, codebook indices $k_1$ and $k_2$ in a second codebook $C_2$, a wideband channel quality indicator, $CQI_1$, and the subband channel quality indicator, $CQI_2$, from a user equipment;

deriving, by the transmitter, a first precoder determined based on the rank indication and the indices $n_1$, $k_1$ and $k_2$ received by the transmitter;

precoding, by the transmitter, data to be sent to the user equipment by the first precoder derived by the transmitter; and

sending, by the transmitter, the data precoded by the precoding unit to the user equipment.

In a first further development of the method according to the eleventh embodiment, the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

In a second further development of the method according to first further development of the eleventh embodiment, the second precoder is determined by the indices $n_1$ and $k_1$ at the transmitter comprises:

the second precoder $\mathbf{W}_1$ is determined as

$$\mathbf{W}_1 = \mathbf{W}_{n_1}^{(1)} \mathbf{W}_{k_1}^{(2)},$$ wherein the $\mathbf{W}_{n_1}^{(1)}$ represents a matrix determined by the index $n_1$ in the codebook $C_1$, and the $\mathbf{W}_{k_1}^{(2)}$ represents a matrix determined

by the index $k_1$ in the codebook $C_2$; and
wherein the third precoder is determined by the indices $n_1$ and $k_2$ at the transmitter comprises:
the third precoder $\mathbf{W}_2$ is determined as

$$\mathbf{W}_2 = \mathbf{W}_{n_1}^{(1)}\mathbf{W}_{k_2}^{(2)},$$ wherein the $\mathbf{W}_{n_1}^{(1)}$ represents a matrix determined by the index $n_1$ in the codebook $C_1$, and the $\mathbf{W}_{k_2}^{(2)}$ represents a matrix determined by the index $k_2$ in the codebook $C_2$.

In a third further development of the method according to first further development of the eleventh embodiment, the second precoder is determined by the indices $n_1$ and $k_1$ at the transmitter comprises:

the second precoder $\mathbf{W}_1$ is determined as

$$\mathbf{W}_1 = \mathbf{W}_{k_1}^{(2)}\mathbf{W}_{n_1}^{(1)},$$ wherein the $\mathbf{W}_{k_1}^{(2)}$ represents a matrix determined by the index $k_1$ in the codebook $C_2$, and the $\mathbf{W}_{n_1}^{(1)}$ represents a matrix determined by the index $n_1$ in the codebook $C1$; and
wherein the third precoder is determined by the indices $n_1$ and $k_2$ at the transmitter comprises:
the third precoder $\mathbf{W}_2$ is determined as

$$\mathbf{W}_2 = \mathbf{W}_{k_2}^{(2)}\mathbf{W}_{n_1}^{(1)},$$ wherein the $\mathbf{W}_{k_2}^{(2)}$ represents a matrix determined by the index $k_2$ in the codebook $C_2$, and the $\mathbf{W}_{n_1}^{(1)}$ represents a matrix determined by the index $n_1$ in the codebook $C_1$.

In a twelfth embodiment, a system for precoding comprises:
a transmitter according to the tenth embodiment or the first further development of the tenth embodiment or the second further development of the tenth embodiment or the third further development of the tenth embodiment or the fourth further development of the tenth embodiment and a user equipment according to the ninth embodiment or the first further development of the ninth embodiment.
In a thirteenth embodiment, a computer program product comprises:
a computer-readable medium comprising:

code for causing at least one computer to obtain a reference signal from a transmitter;
code for causing at least one computer to derive a rank indication, a codebook index $n_1$ in a first codebook $C_1$, codebook indices $k_1$ and $k_2$ in a second codebook $C_2$, a wideband channel quality indicator, $CQI_1$, and a subband channel quality indicator, $CQI_2$,

based on the reference signal;
code for causing at least one computer to send the rank indication, the codebook index $n_1$ in the first codebook $C_1$, the codebook indices $k_1$ and $k_2$ in the second codebook $C_2$, the wideband $CQI_1$ and the subband $CQI_2$ to the transmitter; and
code for causing at least one computer to receive, from the transmitter, data precoded by a first precoder determined by the transmitter based on the rank indication and the indices $n_1$, $k_1$ and $k_2$;
the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

In a fourteenth embodiment, a computer program product comprises:

a computer-readable medium comprising:
code for causing at least one computer to receive a rank indication, a codebook index $n_1$ in a first codebook $C_1$, codebook indices $k_1$ and $k_2$ in a second codebook $C_2$, the wideband channel quality indicator, $CQI_1$, and the subband channel quality indicator, $CQI_2$, from a user equipment;
code for causing at least one computer to derive a first precoder determined based on the rank indication and the indices $n_1$, $k_1$ and $k_2$ received;
code for causing at least one computer to precode data to be sent to the user equipment by the first precoder; and
code for causing at least one computer to send the data precoded to the user equipment;
the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

All functional units in the embodiments of the present invention may be integrated into a processing module, or exist independently, or two or more of such units are integrated into a module. The integrated module may be hardware or a software module.
When being implemented as a software module and sold or applied as an independent product, the integrated module may also be stored in a computer-readable storage medium.
The storage medium may be a Read-Only Memory (ROM), magnetic disk or Compact Disk (CD).
Elaborated above are a media content transmission method and a network-side equipment under the present invention. Although the invention is described through some exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims.

**Claims**

1. A method for precoding in a wireless communication system, comprising:

   obtaining (S201), by a receiver, a reference signal from a transmitter;
   deriving (S202), by the receiver, a rank indication, one codebook index $n_1$ in a first codebook $C_1$, codebook indices $k_1$ and $k_2$ in a second codebook $C_2$, a wideband channel quality indicator, $CQI_1$, and a subband channel quality indicator, $CQI_2$, based on the obtained reference signal, wherein the wideband $CQI_1$ is associated with a second precoder represented by indices $n_1$, $k_1$, and the subband $CQI_2$ is associated with a third precoder represented by indices $n_1$, $k_2$, and wherein the second precoder represents a wideband precoder, and the third precoder represents a subband precoder;
   sending (S203), by the receiver, the rank indication, the codebook index $n_1$ in the first codebook $C_1$, the codebook indices $k_1$ and $k_2$ in the second codebook $C_2$, the wideband $CQI_1$ and the subband $CQI_2$, to the transmitter; and
   receiving (S204), by the receiver, data precoded by a first precoder from the transmitter, wherein the first precoder is determined by the transmitter based on the rank indication and the indices $n_1$, $k_1$ and $k_2$.

2. The method according to claim 1, wherein:

   the second precoder $\mathbf{W}_1$ is determined as $\mathbf{W}_1 = \mathbf{W}_{n_1}^{(1)}\mathbf{W}_{k_1}^{(2)}$, wherein the $\mathbf{W}_{n_1}^{(1)}$ represents a matrix determined by the index $n_1$ in the codebook $C_1$, and the $\mathbf{W}_{k_1}^{(2)}$ represents a matrix determined by the index $k_1$ in the codebook $C_2$, and

   the third precoder $\mathbf{W}_2$ is determined as $\mathbf{W}_2 = \mathbf{W}_{n_1}^{(1)}\mathbf{W}_{k_2}^{(2)}$, wherein the $\mathbf{W}_{n_1}^{(1)}$ represents a matrix determined by the index $n_1$ in the

codebook $C_1$, and the $\mathbf{W}_{k_2}^{(2)}$ represents a matrix determined by the index $k_2$ in the codebook $C_2$.

3. The method according to claim 2, wherein:

   the $\mathbf{W}_{k_1}^{(2)}$ is an identity matrix or a block matrix composed of identity matrices of smaller dimension.

4. The method according to claim 1, wherein:

   the second precoder $\mathbf{W}_1$ is determined as $\mathbf{W}_1 = \mathbf{W}_{k_1}^{(2)}\mathbf{W}_{n_1}^{(1)}$, wherein the $\mathbf{W}_{k_1}^{(2)}$ represents a matrix determined by the index $k_1$ in the codebook $C_2$, and the $\mathbf{W}_{n_1}^{(1)}$ represents a matrix determined by the index $n_1$ in the codebook $C_1$; and
   the third precoder $\mathbf{W}_2$ is determined as $\mathbf{W}_2 = \mathbf{W}_{k_2}^{(2)}\mathbf{W}_{n_1}^{(1)}$, wherein the $\mathbf{W}_{k_2}^{(2)}$ represents a matrix determined by the index $k_2$ in the codebook $C_2$, and the $\mathbf{W}_{n_1}^{(1)}$ represents a matrix determined by the index $n_1$ in the codebook $C_1$.

5. The method according to claim 1, wherein:
   the codebook $C_2$ and codebook $C_1$ are derived by both the transmitter and the receiver.

6. A user equipment, comprising:

   an obtaining unit (1901), configured to obtain a reference signal from a transmitter;
   a deriving unit (1902), configured to derive a rank indication, one codebook index $n_1$ in a first codebook $C_1$, codebook indices $k_1$ and $k_2$ in a second codebook $C_2$, a wideband channel quality indicator $CQI_1$ and a subband channel quality indicator $CQI_2$, based on the reference signal obtained by the obtaining unit, wherein the wideband $CQI_1$ is associated with a second precoder represented by indices $n_1$, $k_1$, and the subband $CQI_2$ is associated with a third precoder represented by indices $n_1$, $k_2$, and wherein the second precoder represents a wideband precoder, and the third precoder represents a subband precoder;
   a sending unit (1903), configured to send the rank indication, the codebook index $n_1$ in the first codebook $C_1$, the codebook indices $k_1$ and $k_2$ in the second codebook $C_2$, the wideband $CQI_1$

and the subband CQI$_2$ to the transmitter; and a receiving unit (1904), configured to receive, from the transmitter, data precoded by a first precoder, wherein the first precoder is determined by the transmitter based on the rank indication and the indices $n_1$, $k_1$ and $k_2$.

7. A transmitter, comprising:

a receiving unit, configured to receive a rank indication, a codebook index $n_1$ in a first codebook $C_1$, codebook indices $k_1$ and $k_2$ in a second codebook $C_2$, a wideband channel quality indicator, CQI$_1$, and a subband channel quality indicator. CQI$_2$, from a user equipment;
a deriving unit, configured to derive a first precoder determined based on the rank indication and the indices $n_1$, $k_1$ and $k_2$ received by the receiving unit; and
a precoding unit, configured to precode data to be sent to the user equipment by the first precoder derived by the deriving unit; and
a sending unit, configured to send the data precoded by the precoding unit to the user equipment;
wherein the deriving unit comprises:

a first deriving module, configured to derive a second precoder determined by the indices $n_1$ and $k_1$ ;and
a second deriving module, configured to derive a third precoder determined by the indices $n_1$
and $k_2$; and wherein
the second precoder represents a wideband precoder and the third precoder represents a subband precoder, and wherein the wideband CQI$_1$ is associated with the second precoder, and the subband CQI$_2$ is associated with the third precoder.

8. The transmitter according to claim 7, wherein the first deriving module comprises:

a first determining submodule, configured to determine a matrix $\mathbf{W}_{n_1}^{(1)}$ by the index $n_1$ in the codebook $C_1$;
a second determining submodule, configured to determine a matrix $\mathbf{W}_{k_1}^{(2)}$ by the index $k_1$ in the codebook $C_2$; and
a third determining submodule, configured to determine the second precoder $\mathbf{W}_1$ as

$$\mathbf{W}_1 = \mathbf{W}_{n_1}^{(1)}\mathbf{W}_{k_1}^{(2)} ;$$ and

the second deriving module comprises:

a fourth determining submodule, configured to determine a matrix $\mathbf{W}_{n_1}^{(1)}$ by the index $n_1$ in the codebook $C_1$;
a fifth determining submodule, configured to determine a matrix $\mathbf{W}_{k_2}^{(2)}$ by the index $k_2$ in the codebook $C_2$; and
a sixth determining submodule, configured to determine the third precoder $\mathbf{W}_2$ as

$$\mathbf{W}_2 = \mathbf{W}_{n_1}^{(1)}\mathbf{W}_{k_2}^{(2)} ;$$

9. The transmitter according to claim 7, wherein the first deriving module comprises:

a first determining submodule, configured to determine a matrix $\mathbf{W}_{k_1}^{(2)}$ by the index $k_1$ in the codebook $C_2$;
a second determining submodule, configured to determine a matrix $\mathbf{W}_{n_1}^{(1)}$ by the index $n_1$ in the codebook $C_1$; and
a third determining submodule, configured to determine the second precoder $\mathbf{W}_1$ as

$$\mathbf{W}_1 = \mathbf{W}_{k_1}^{(2)}\mathbf{W}_{n_1}^{(1)} ;$$ and

the second deriving module comprises:

a fourth determining submodule, configured to determine a matrix $\mathbf{W}_{k_2}^{(2)}$ by the index $k_2$ in the codebook $C_2$;
a fifth determining submodule, configured to determine a matrix $\mathbf{W}_{n_1}^{(1)}$ by the index $n_1$ in the codebook $C_1$; and
a sixth determining submodule, configured to determine the third precoder $\mathbf{W}_2$ as

$$\mathbf{W}_2 = \mathbf{W}_{k_2}^{(2)}\mathbf{W}_{n_1}^{(1)} .$$

10. The transmitter according to any one of claims 7 to 9,wherein
the transmitter is a base station.

11. A method for precoding in a wireless communication system, comprising:

receiving, by a transmitter, a rank indication, a codebook index $n_1$ in a first codebook $C_1$, code-

book indices $k_1$ and $k_2$ in a second codebook $C_2$, a wideband channel quality indicator, $CQI_1$, and the subband channel quality indicator, $CQI_2$, from a user equipment;

deriving, by the transmitter, a first precoder determined based on the rank indication and the indices $n_1$, $k_1$ and $k_2$ received by the transmitter; precoding, by the transmitter, data to be sent to the user equipment by the first precoder derived by the transmitter; and

sending, by the transmitter, the data precoded by the precoding unit to the user equipment; wherein the wideband $CQI_1$ is associated with the second precoder represented by indices $n_1$, $k_1$, and the subband $CQI_2$ is associated with the third precoder represented by indices $n_1$, $k_2$, and wherein the second precoder represents a wideband precoder, and the third precoder represents a subband precoder.

12. The method according to claim 11, wherein the second precoder is determined by the indices $n_1$ and $k_1$ at the transmitter comprises:

the second precoder $\mathbf{W}_1$ is determined as $\mathbf{W}_1 = \mathbf{W}_{n_1}^{(1)}\mathbf{W}_{k_1}^{(2)}$, wherein the $\mathbf{W}_{n_1}^{(1)}$ represents a matrix determined by the index $n_1$ in the codebook $C_1$, and the $\mathbf{W}_{k_1}^{(2)}$ represents a matrix determined by the index $k_1$ in the codebook $C_2$; and

wherein the third precoder is determined by the indices $n_1$ and $k_2$ at the transmitter comprises: the third precoder $\mathbf{W}_2$ is determined as $\mathbf{W}_2 = \mathbf{W}_{n_1}^{(1)}\mathbf{W}_{k_2}^{(2)}$, wherein the $\mathbf{W}_{n_1}^{(1)}$ represents a matrix determined by the index $n_1$ in the codebook $C_1$, and the $\mathbf{W}_{k_2}^{(2)}$ represents a matrix determined by the index $k_2$ in the codebook $C_2$.

13. The method according to claim 11, wherein the second precoder is determined by the indices $n_1$ and $k_1$ at the transmitter comprises:

the second precoder $\mathbf{W}_1$ is determined as $\mathbf{W}_1 = \mathbf{W}_{k_1}^{(2)}\mathbf{W}_{n_1}^{(1)}$, wherein the $\mathbf{W}_{k_1}^{(2)}$ represents a matrix determined by the index $k_1$ in the codebook $C_2$, and the $\mathbf{W}_{n_1}^{(1)}$ represents a matrix determined by the index $n_1$ in the codebook $C_1$;

and

wherein the third precoder is determined by the indices $n_1$ and $k_2$ at the transmitter comprises: the third precoder $\mathbf{W}_2$ is determined as $\mathbf{W}_2 = \mathbf{W}_{k_2}^{(2)}\mathbf{W}_{n_1}^{(1)}$, wherein the $\mathbf{W}_{k_2}^{(2)}$ represents a matrix determined by the index $k_2$ in the codebook $C_2$, and the $\mathbf{W}_{n_1}^{(1)}$ represents a matrix determined by the index $n_1$ in the codebook $C_1$.

14. A system for precoding, comprising:
a transmitter according to any one of claims 7 to 10 and a user equipment according to claim 6.

15. A computer program product, comprising:
a computer-readable medium comprising:

code for causing at least one computer to obtain a reference signal from a transmitter;
code for causing at least one computer to derive a rank indication, one codebook index $n_1$ in a first codebook $C_1$, codebook indices $k_1$ and $k_2$ in a second codebook $C_2$, a wideband channel quality indicator, $CQI_1$, and a subband channel quality indicator, $CQI_2$, based on the reference signal, wherein the wideband $CQI_1$ is associated with a second precoder represented by indices $n_1$, $k_1$, and the subband $CQI_2$ is associated with a third precoder represented by indices $n_1$, $k_2$, and wherein the second precoder represents a wideband precoder, and the third precoder represents a subband precoder ;
code for causing at least one computer to send the rank indication, the codebook index $n_1$ in the first codebook $C_1$, the codebook indices $k_1$ and $k_2$ in the second codebook $C_2$, the wideband $CQI_1$ and the subband $CQI_2$ to the transmitter; and
code for causing at least one computer to receive, from the transmitter, data precoded by a first precoder determined by the transmitter based on the rank indication and the indices $n_1$, $k_1$ and $k_2$.

16. A computer program product, comprising:
a computer-readable medium comprising:

code for causing at least one computer to receive a rank indication, a codebook index $n_1$ in a first codebook $C_1$, codebook indices $k_1$ and $k_2$ in a second codebook $C_2$, the wideband channel quality indicator, $CQI_1$, and the subband channel quality indicator, $CQI_2$, from a user equipment;
code for causing at least one computer to derive a first precoder determined based on the rank indication and the indices $n_1$, $k_1$ and $k_2$ received; code for causing at least one computer to precode data to be sent to the user equipment by the first precoder derived; and code for causing at least one computer to send the data precoded to the user equipment; wherein the wideband $CQI_1$ is associated with the second precoder represented by indices $n_1$, $k_1$, the subband $CQI_2$ is associated with the third precoder represented by indices $n_1$, $k_2$, and wherein the second precoder represents a wideband precoder, and the third precoder represents a subband precoder.

**Patentansprüche**

1.  Verfahren zur Vorcodierung in einem drahtlosen Kommunikationssystem, das aufweist:

    das Erlangen (S201) mittels eines Empfängers eines Referenzsignals von einem Sender; das Ableiten (S202) mittels des Empfängers einer Ranganzeige, eines Codebuchindex $n_1$ in einem ersten Codebuch $C_1$, von Codebuchindizes $k_1$ und $k_2$ in einem zweiten Codebuch $C_2$, eines Breitbandkanalqualitätsanzeigers $CQI_1$ (CQI, Channel Quality Indicator) und eines Teilbandkanalqualitätsanzeigers $CQI_2$ basierend auf dem erlangten Referenzsignal, wobei der $CQI_1$ des Breitbands einem durch die Indizes $n_1$, $k_1$ dargestellten zweiten Vorcodierer zugeordnet ist und der $CQI_2$ des Teilbands einem durch die Indizes $n_1$, $k_2$ dargestellten dritten Vorcodierer zugeordnet ist und wobei der zweite Vorcodierer einen Breitband-Vorcodierer darstellt und der dritte Vorcodierer einen Teilband-Vorcodierer darstellt; das Senden (S203) mittels des Empfängers der Ranganzeige, des Codebuchindex $n_1$ in dem ersten Codebuch $C_1$, der Codebuchindizes $k_1$ und $k_2$ in dem zweiten Codebuch $C_2$, des $CQI_1$ des Breitbands und des $CQI_2$ des Teilbands an den Sender; und das Empfangen (S204) mittels des Empfängers von durch einen ersten Vorcodierer vorcodierten Daten von dem Sender, wobei der erste Vorcodierer durch den Sender basierend auf der Ranganzeige und den Indizes $n_1$, $k_1$ und $k_2$ bestimmt wird.

2.  Verfahren nach Anspruch 1, wobei:

    der zweite Vorcodierer $W_1$ als $W_1 = W_{n_1}^{(1)} W_{k_1}^{(2)}$ bestimmt ist, wobei $W_{n_1}^{(1)}$

    eine durch den Index $n_1$ in dem Codebuch $C_1$ bestimmte Matrix darstellt und $W_{k_1}^{(2)}$ eine durch den Index $k_1$ in dem Codebuch $C_2$ bestimmte Matrix darstellt; und der dritte Vorcodierer $W_2$ als

    $W_2 = W_{n_1}^{(1)} W_{k_2}^{(2)}$ bestimmt ist, wobei $W_{n_1}^{(1)}$ eine durch den Index $n_1$ in dem Codebuch $C_1$

    bestimmte Matrix darstellt und $W_{k_2}^{(2)}$ eine durch den Index $k_2$ in dem Codebuch $C_2$ bestimmte Matrix darstellt.

3.  Verfahren nach Anspruch 2, wobei:

    $W_{k_1}^{(2)}$ eine Einheitsmatrix oder eine aus Einheitsmatrizen einer niedrigeren Dimension bestehende Blockmatrix ist.

4.  Verfahren nach Anspruch 1, wobei:

    der zweite Vorcodierer $W_1$ als

    $W_1 = W_{k_1}^{(2)} W_{n_1}^{(1)}$ bestimmt ist, wobei $W_{k_1}^{(2)}$ eine durch den Index $k_1$ in dem Codebuch $C_2$

    bestimmte Matrix darstellt und $W_{n_1}^{(1)}$ eine durch den Index $n_1$ in dem Codebuch $C_1$ bestimmte Matrix darstellt; und der dritte Vorcodierer $W_2$ als

    $W_2 = W_{k_2}^{(2)} W_{n_1}^{(1)}$ bestimmt ist, wobei $W_{k_2}^{(2)}$ eine durch den Index $k_2$ in dem Codebuch $C_2$

    bestimmte Matrix darstellt und $W_{n_1}^{(1)}$ eine durch den Index $n_1$ in dem Codebuch $C_1$ bestimmte Matrix darstellt.

5.  Verfahren nach Anspruch 1, wobei: das Codebuch $C_2$ und das Codebuch $C_1$ mittels sowohl des Senders als auch des Empfängers abgeleitet werden.

6.  Teilnehmergerät, das aufweist:

    eine Erlangungseinheit (1901), die dazu ausgebildet ist, ein Referenzsignal von einem Sender zu erlangen; eine Ableiteinheit (1902), die dazu ausgebildet ist, eine Ranganzeige, einen Codebuchindex $n_1$ in einem ersten Codebuch $C_1$, Codebuchindizes $k_1$ und $k_2$ in einem zweiten Codebuch $C_2$, einen Breitbandkanalqualitätsanzeiger $CQI_1$ und ei-

nen Teilbandkanalqualitätsanzeiger CQI$_2$ basierend auf dem mittels der Erlangungseinheit erlangten Referenzsignal abzuleiten, wobei der CQI$_1$ des Breitbands einem durch die Indizes $n_1$, $k_1$ dargestellten zweiten Vorcodierer zugeordnet ist und der CQI$_2$ des Teilbands einem durch die Indizes $n_1$, $k_2$ dargestellten dritten Vorcodierer zugeordnet ist und wobei der zweite Vorcodierer einen Breitband-Vorcodierer darstellt und der dritte Vorcodierer einen Teilband-Vorcodierer darstellt;
eine Sendeeinheit (1903), die dazu ausgebildet ist, die Ranganzeige, den Codebuchindex $n_1$ in dem ersten Codebuch C$_1$, die Codebuchindizes $k_1$ und $k_2$ in dem zweiten Codebuch C$_2$, den CQI$_1$ des Breitbands und den CQI$_2$ des Teilbands an den Sender zu senden; und
eine Empfangseinheit (1904), die dazu ausgebildet ist, von dem Sender durch einen ersten Vorcodierer vorcodierte Daten zu empfangen, wobei der erste Vorcodierer durch den Sender basierend auf der Ranganzeige und den Indizes $n_1$, $k_1$ und $k_2$ bestimmt wird.

7. Sender, der aufweist:

eine Empfangseinheit, die dazu ausgebildet ist, eine Ranganzeige, einen Codebuchindex $n_1$ in einem ersten Codebuch C$_1$, Codebuchindizes $k_1$ und $k_2$ in einem zweiten Codebuch C$_2$, einen Breitbandkanalqualitätsanzeiger CQI$_1$ und einen Teilbandkanalqualitätsanzeiger CQI$_2$ von einem Teilnehmergerät zu empfangen;
eine Ableiteinheit, die dazu ausgebildet ist, einen basierend auf der Ranganzeige und den Indizes $n_1$, $k_1$ und $k_2$, die durch die Empfangseinheit empfangen werden, bestimmten ersten Vorcodierer abzuleiten; und
eine Vorcodierungseinheit, die dazu ausgebildet ist, an das Teilnehmergerät zu sendende Daten durch den mittels der Ableiteinheit abgeleiteten ersten Vorcodierer vorzucodieren; und
eine Sendeeinheit, die dazu ausgebildet ist, die durch die Vorcodierungseinheit vorcodierten Daten an das Teilnehmergerät zu senden;
wobei die Ableiteinheit aufweist:

ein erstes Ableitmodul, das dazu ausgebildet ist, einen durch die Indizes $n_1$ und $k_1$ bestimmten zweiten Vorcodierer abzuleiten; und
ein zweites Ableitmodul, das dazu ausgebildet ist, einen durch die Indizes $n_1$ und $k_2$ bestimmten dritten Vorcodierer abzuleiten; und wobei der zweite Vorcodierer einen Breitband-Vorcodierer darstellt und der dritte Vorcodierer einen Teilband-Vorcodierer darstellt und wobei der CQI$_1$ des Breitbands

dem zweiten Vorcodierer zugeordnet ist und der CQI$_2$ des Teilbands dem dritten Vorcodierer zugeordnet ist.

8. Sender nach Anspruch 7, wobei das erste Ableitmodul aufweist:

ein erstes Bestimmungsuntermodul, das dazu ausgebildet ist, eine Matrix $W_{n_1}^{(1)}$ durch den Index $n_1$ in dem Codebuch C$_1$ zu bestimmen;
ein zweites Bestimmungsuntermodul, das dazu ausgebildet ist, eine Matrix $W_{k_1}^{(2)}$ durch den Index $k_1$ in dem Codebuch C$_2$ zu bestimmen; und
ein drittes Bestimmungsuntermodul, das dazu ausgebildet ist, den zweiten Vorcodierer $W_1$ als $W_1 = W_{n_1}^{(1)} W_{k_1}^{(2)}$ zu bestimmen; und
das zweite Ableitmodul aufweist:

ein viertes Bestimmungsuntermodul, das dazu ausgebildet ist, eine Matrix $W_{n_1}^{(1)}$ durch den Index $n_1$ in dem Codebuch C$_1$ zu bestimmen;
ein fünftes Bestimmungsuntermodul, das dazu ausgebildet ist, eine Matrix $W_{k_2}^{(2)}$ durch den Index $k_2$ in dem Codebuch C$_2$ zu bestimmen; und
ein sechstes Bestimmungsuntermodul, das dazu ausgebildet ist, den dritten Vorcodierer $W_2$ als $W_2 = W_{n_1}^{(1)} W_{k_2}^{(2)}$ zu bestimmen.

9. Sender nach Anspruch 7, wobei das erste Ableitmodul aufweist:

ein erstes Bestimmungsuntermodul, das dazu ausgebildet ist, eine Matrix $W_{k_1}^{(2)}$ durch den Index $k_1$ in dem Codebuch C$_2$ zu bestimmen;
ein zweites Bestimmungsuntermodul, das dazu ausgebildet ist, eine Matrix $W_{n_1}^{(1)}$ durch den Index $n_1$ in dem Codebuch C$_1$ zu bestimmen; und
ein drittes Bestimmungsuntermodul, das dazu ausgebildet ist, den zweiten Vorcodierer $W_1$ als $W_1 = W_{k_1}^{(2)} W_{n_1}^{(1)}$ zu bestimmen; und
das zweite Ableitmodul aufweist:

ein viertes Bestimmungsuntermodul, das dazu ausgebildet ist, eine Matrix $W_{k_2}^{(2)}$ durch den Index $k_2$ in dem Codebuch $C_2$ zu bestimmen;
ein fünftes Bestimmungsuntermodul, das dazu ausgebildet ist, eine Matrix $W_{n_1}^{(1)}$ durch den Index $n_1$ in dem Codebuch $C_1$ zu bestimmen; und
ein sechstes Bestimmungsuntermodul, das dazu ausgebildet ist, den dritten Vorcodierer $W_2$ als $W_2 = W_{k_2}^{(2)} W_{n_1}^{(1)}$ zu bestimmen.

10. Sender nach einem der Ansprüche 7 bis 9, wobei der Sender eine Basisstation ist.

11. Verfahren zur Vorcodierung in einem drahtlosen Kommunikationssystem, das aufweist:

das Empfangen mittels eines Senders einer Ranganzeige, eines Codebuchindex $n_1$ in einem ersten Codebuch $C_1$, von Codebuchindizes $k_1$ und $k_2$ in einem zweiten Codebuch $C_2$, eines Breitbandkanalqualitätsanzeigers $CQI_1$ und des Teilbandkanalqualitätsanzeigers $CQI_2$ von einem Teilnehmergerät;
das Ableiten mittels des Senders eines basierend auf der Ranganzeige und den Indizes $n_1$, $k_1$ und $k_2$, die durch den Sender empfangen werden, bestimmten ersten Vorcodierers;
das Vorcodieren mittels des Senders von an das Teilnehmergerät zu sendenden Daten durch den mittels des Senders abgeleiteten ersten Vorcodierer; und
das Senden mittels des Senders der durch die Vorcodierungseinheit vorcodierten Daten an das Teilnehmergerät;
wobei der $CQI_1$ des Breitbands dem durch die Indizes $n_1$, $k_1$ dargestellten zweiten Vorcodierer zugeordnet ist und der $CQI_2$ des Teilbands dem durch die Indizes $n_1$, $k_2$ dargestellten dritten Vorcodierer zugeordnet ist und wobei der zweite Vorcodierer einen Breitband-Vorcodierer darstellt und der dritte Vorcodierer einen Teilband-Vorcodierer darstellt.

12. Verfahren nach Anspruch 11, wobei der zweite Vorcodierer durch die Indizes $n_1$ und $k_1$ am Sender bestimmt wird, aufweist:

der zweite Vorcodierer $W_1$ ist als $W_1 = W_{n_1}^{(1)} W_{k_1}^{(2)}$ bestimmt, wobei $W_{n_1}^{(1)}$ ei-

ne durch den Index $n_1$ in dem Codebuch $C_1$ bestimmte Matrix darstellt und $W_{k_1}^{(2)}$ eine durch den Index $k_1$ in dem Codebuch $C_2$ bestimmte Matrix darstellt; und
wobei der dritte Vorcodierer durch die Indizes $n_1$ und $k_2$ am Sender bestimmt wird, aufweist:
der dritte Vorcodierer $W_2$ ist als
$W_2 = W_{n_1}^{(1)} W_{k_2}^{(2)}$ bestimmt, wobei $W_{n_1}^{(1)}$ eine durch den Index $n_1$ in dem Codebuch $C_1$ bestimmte Matrix darstellt und $W_{k_2}^{(2)}$ eine durch den Index $k_2$ in dem Codebuch $C_2$ bestimmte Matrix darstellt.

13. Verfahren nach Anspruch 11, wobei der zweite Vorcodierer durch die Indizes $n_1$ und $k_1$ am Sender bestimmt wird, aufweist:

der zweite Vorcodierer $W_1$ ist als
$W_1 = W_{k_1}^{(2)} W_{n_1}^{(1)}$ bestimmt, wobei $W_{k_1}^{(2)}$ eine durch den Index $k_1$ in dem Codebuch $C_2$ bestimmte Matrix darstellt und $W_{n_1}^{(1)}$ eine durch den Index $n_1$ in dem Codebuch $C_1$ bestimmte Matrix darstellt; und
wobei der dritte Vorcodierer durch die Indizes $n_1$ und $k_2$ am Sender bestimmt wird, aufweist:
der dritte Vorcodierer $W_2$ ist als
$W_2 = W_{k_2}^{(2)} W_{n_1}^{(1)}$ bestimmt, wobei $W_{k_2}^{(2)}$ eine durch den Index $k_2$ in dem Codebuch $C_2$ bestimmte Matrix darstellt und $W_{n_1}^{(1)}$ eine durch den Index $n_1$ in dem Codebuch $C_1$ bestimmte Matrix darstellt.

14. System zur Vorcodierung, das aufweist:
einen Sender nach einem der Ansprüche 7 bis 10 und ein Teilnehmergerät nach Anspruch 6.

15. Computerprogrammprodukt, das aufweist:
ein computerlesbares Medium, das aufweist:

Code zum Bewirken, dass mindestens ein Computer ein Referenzsignal von einem Sender erlangt;
Code zum Bewirken, dass mindestens ein Computer eine Ranganzeige, einen Codebuchindex $n_1$ in einem ersten Codebuch $C_1$, Codebuchindizes $k_1$ und $k_2$ in einem zweiten Codebuch $C_2$, einen Breitbandkanalqualitätsanzeiger $CQI_1$

und einen Teilbandkanalqualitätsanzeiger CQI$_2$ basierend auf dem Referenzsignal ableitet, wobei der CQI$_1$ des Breitbands einem durch die Indizes n$_1$, k$_1$ dargestellten zweiten Vorcodierer zugeordnet ist und der CQI$_2$ des Teilbands einem durch die Indizes n$_1$, k$_2$ dargestellten dritten Vorcodierer zugeordnet ist und wobei der zweite Vorcodierer einen Breitband-Vorcodierer darstellt und der dritte Vorcodierer einen Teilband-Vorcodierer darstellt;

Code zum Bewirken, dass mindestens ein Computer die Ranganzeige, den Codebuchindex n$_1$ in dem ersten Codebuch C$_1$, die Codebuchindizes k$_1$ und k$_2$ in dem zweiten. Codebuch C$_2$, den CQI$_1$ des Breitbands und den CQI$_2$ des Teilbands an den Sender sendet; und

Code zum Bewirken, dass mindestens ein Computer von dem Sender durch einen ersten Vorcodierer, der durch den Sender basierend auf der Ranganzeige und den Indizes n$_1$, k$_1$ und k$_2$ bestimmt wird, vorcodierte Daten empfängt.

16. Computerprogrammprodukt, das aufweist:
ein computerlesbares Medium, das aufweist:

Code zum Bewirken, dass mindestens ein Computer eine Ranganzeige, einen Codebuchindex n$_1$ in einem ersten Codebuch C$_1$, Codebuchindizes k$_1$ und k$_2$ in einem zweiten Codebuch C$_2$, den Breitbandkanalqualitätsanzeiger CQI$_1$ und den Teilbandkanalqualitätsanzeiger CQI$_2$ von einem Teilnehmergerät empfängt;

Code zum Bewirken, dass mindestens ein Computer einen ersten Vorcodierer ableitet, der basierend auf der Ranganzeige und den Indizes n$_1$, k$_1$ und k$_2$, die empfangen werden, bestimmt wird;

Code zum Bewirken, dass mindestens ein Computer an das Teilnehmergerät zu sendende Daten durch den abgeleiteten ersten Vorcodierer vorcodiert; und

Code zum Bewirken, dass mindestens ein Computer die vorcodierten Daten an das Teilnehmergerät sendet;

wobei der CQI$_1$ des Breitbands dem durch die Indizes n$_1$, k$_1$ dargestellten zweiten Vorcodierer zugeordnet ist, der CQI$_2$ des Teilbands dem durch die Indizes n$_1$, k$_2$ dargestellten dritten Vorcodierer zugeordnet ist und wobei der zweite Vorcodierer einen Breitband-Vorcodierer darstellt und der dritte Vorcodierer einen Teilband-Vorcodierer darstellt.

**Revendications**

1. Procédé de précodage dans un système de communication sans fil, comprenant de :

obtenir (S201), par un récepteur, un signal de référence à partir d'un émetteur ;

dériver (S202), par le récepteur, une indication de classement, un indice de dictionnaire $n_1$ dans un premier dictionnaire $C_1$, des indices de dictionnaire $k_1$ et $k_2$ dans un second dictionnaire $C_2$, un indicateur de qualité de canal de large bande, CQI$_1$, et un indicateur de qualité de canal de sous-bande, CQI$_2$, sur la base du signal de référence obtenu, dans lequel le CQI$_1$ de large bande est associé à un second précodeur représenté par les indices $n_1$, $k_1$, et le CQI$_2$ de sous-bande est associé à un troisième précodeur représenté par des indices $n_1$, $k_2$, et dans lequel le second précodeur représente un précodeur de large bande, et le troisième précodeur représente un précodeur de sous-bande ;

envoyer (S203), par le récepteur, l'indication de classement, l'indice de dictionnaire $n_1$ dans le premier dictionnaire $C_1$, les indices de dictionnaire $k_1$ et $k_2$ dans le second dictionnaire $C_2$, le CQI$_1$ de large bande et le CQI$_2$ de sous-bande, à l'émetteur ; et

recevoir (S204), par le récepteur, des données précodées par un premier précodeur à partir de l'émetteur, dans lequel le premier précodeur est déterminé par l'émetteur sur la base de l'indication de classement et des indices $n_1$, $k_1$ et k$_2$.

2. Procédé selon la revendication 1, dans lequel :

le second précodeur W$_1$ est déterminé comme

$$\mathbb{W}_1 = W_{n_1}^{(1)} W_{k_1}^{(2)},$$ où $W_{n_1}^{(1)}$ représente une matrice déterminée par l'indice $n_1$ dans le dictionnaire $C_1$, et $W_{k_1}^{(2)}$ représente une matrice déterminée par l'indice $k_1$ dans le dictionnaire $C_2$ ; et

le troisième précodeur W$_2$ est déterminé comme

$$\mathbb{W}_2 = W_{n_1}^{(1)} W_{k_2}^{(2)},$$ où $W_{n_1}^{(1)}$ représente une matrice déterminée par l'indice $n_1$ dans le dictionnaire $C_1$, et $W_{k_2}^{(2)}$ représente une matrice déterminée par l'indice $k_2$ dans le dictionnaire $C_2$.

3. Procédé selon la revendication 2, dans lequel :
$W_{k_1}^{(2)}$ est une matrice d'identité ou une matrice de blocs composée de matrices d'identité de plus petite dimension.

4. Procédé selon la revendication 1, dans lequel :

le second précodeur $W_1$ est déterminé comme

$$W_1 = W_{k_1}^{(2)} W_{n_1}^{(1)},$$ où $W_{k_1}^{(2)}$ représente une matrice déterminée par l'indice $k_1$ dans le dictionnaire $C_2$, et $W_{n_1}^{(1)}$ représente une matrice déterminée par l'indice $n_1$ dans le dictionnaire $C_1$ ; et

le troisième précodeur $W_2$ est déterminé comme

$$W_2 = W_{k_2}^{(2)} W_{n_1}^{(1)},$$ où $W_{k_2}^{(2)}$ représente une matrice déterminée par l'indice $k_2$ dans le dictionnaire $C_2$, et $W_{n_1}^{(1)}$ représente une matrice déterminée par l'indice $n_1$ dans le dictionnaire $C_1$.

**5.** Procédé selon la revendication 1, dans lequel : le dictionnaire $C_2$ et le dictionnaire $C_1$ sont dérivés à la fois par l'émetteur et le récepteur.

**6.** Équipement d'utilisateur, comprenant :

une unité d'obtention (1901), configurée pour obtenir un signal de référence à partir d'un émetteur ;
une unité de dérivation (1902), configurée pour dériver une indication de classement, un indice de dictionnaire $n_1$ dans un premier dictionnaire $C_1$, des indices de dictionnaire $k_1$ et $k_2$ dans un second dictionnaire $C_2$, un indicateur de qualité de canal de large bande $CQI_1$, et un indicateur de qualité de canal de sous-bande $CQI_2$, sur la base du signal de référence obtenu par l'unité d'obtention, dans lequel le $CQI_1$ de large bande est associé à un second précodeur représenté par des indices $n_1$, $k_1$, et le $CQI_2$ de sous-bande est associé à un troisième précodeur représenté par des indices $n_1$, $k_2$, et dans lequel le second précodeur représente un précodeur de large bande, et le troisième précodeur représente un précodeur de sous-bande ;
une unité d'envoi (1903), configurée pour envoyer l'indication de classement, l'indice de dictionnaire $n_1$ dans le premier dictionnaire $C_1$, les indices de dictionnaire $k_1$ et $k_2$ dans le second dictionnaire $C_2$, le $CQI_1$ de large bande et le $CQI_2$ de sous-bande, à l'émetteur ; et
une unité de réception (1904) configurée pour recevoir, à partir de l'émetteur, des données précodées par un premier précodeur, dans lequel le premier précodeur est déterminé par l'émetteur sur la base de l'indication de classement et des indices $n_1$, $k_1$ et $k_2$.

**7.** Émetteur, comprenant :

une unité de réception, configurée pour recevoir une indication de classement, un indice de dictionnaire $n_1$ dans un premier dictionnaire $C_1$, des indices de dictionnaire $k_1$ et $k_2$ dans un second dictionnaire $C_2$, un indicateur de qualité de canal de large bande $CQI_1$, et un indicateur de qualité de canal de sous-bande, $CQI_2$, à partir d'un équipement d'utilisateur ;
une unité de dérivation, configurée pour dériver un premier précodeur déterminé sur la base de l'indication de classement et des indices $n_1$, $k_1$ et $k_2$ reçus par l'unité de réception ; et
une unité de précodage, configurée pour précoder des données à envoyer à l'équipement d'utilisateur par le premier précodeur dérivé par l'unité de dérivation ; et
une unité d'envoi, configurée pour envoyer les données précodées par l'unité de précodage à l'équipement d'utilisateur ;
dans lequel l'unité de dérivation comprend :

un premier module de dérivation, configuré pour dériver un second précodeur déterminé par les indices $n_1$ et $k_1$ ; et
un second module de dérivation, configuré pour dériver un troisième précodeur déterminé par les indices $n_1$ et $k_2$ ; et dans lequel le second précodeur représente un précodeur de large bande et le troisième précodeur représente un précodeur de sous-bande, et dans lequel le $CQI_1$ de large bande est associé au second précodeur, et le $CQI_2$ de sous-bande est associé au troisième précodeur.

**8.** Émetteur selon la revendication 7, dans lequel le premier module de dérivation comprend :

un premier sous-module de détermination, configuré pour déterminer une matrice $W_{n_1}^{(1)}$ par l'indice $n_1$ dans le dictionnaire $C_1$ ;
un second sous-module de détermination, configuré pour déterminer une matrice $W_{k_1}^{(2)}$ par l'indice $k_1$ dans le dictionnaire $C_2$ ; et
un troisième sous-module de détermination, configuré pour déterminer le second précodeur $W_1$ comme $$W_1 = W_{n_1}^{(1)} W_{k_1}^{(2)};$$ et
le second module de dérivation comprend :

un quatrième sous-module de détermination, configuré pour déterminer une matrice

$W_{n_1}^{(1)}$ par l'indice $n_1$ dans le dictionnaire $C_1$ ;

un cinquième sous-module de détermination, configuré pour déterminer une matrice $W_{k_2}^{(2)}$ par l'indice $k_2$ dans le dictionnaire $C_2$ ; et

un sixième sous-module de détermination, configuré pour déterminer le troisième précodeur $W_2$ comme $W_2 = W_{n_1}^{(1)} W_{k_2}^{(2)}$.

9. Émetteur selon la revendication 7, dans lequel

le premier module de dérivation comprend :
un premier sous-module de détermination, configuré pour déterminer une matrice par l'indice $k_1$ dans le dictionnaire $C_2$,
un second sous-module de détermination, configuré pour déterminer une matrice $W_{n_1}^{(1)}$ par l'indice $n_1$ dans le dictionnaire $C_1$ ; et
un troisième sous-module de détermination, configuré pour déterminer le second précodeur $W_1$ comme $W_1 = W_{k_1}^{(2)} W_{n_1}^{(1)}$, et
le second module de dérivation comprend :

un quatrième sous-module de détermination, configuré pour déterminer une matrice $W_{k_2}^{(2)}$ par l'indice $k_2$ dans le dictionnaire $C_2$ ;
un cinquième sous-module de détermination, configuré pour déterminer une matrice $W_{n_1}^{(1)}$ par l'indice $n_1$ dans le dictionnaire $C_1$, et
un sixième sous-module de détermination, configuré pour déterminer le troisième précodeur $W_2$ comme $W_2 = W_{k_2}^{(2)} W_{n_1}^{(1)}$.

10. Émetteur selon l'une quelconque des revendications 7 à 9, dans lequel l'émetteur est une station de base.

11. Procédé de précodage dans un système de communication sans fil, comprenant de :

recevoir, par un émetteur, une indication de classement, un indice de dictionnaire $n_1$ dans un premier dictionnaire $C_1$, des indices de dictionnaire $k_1$ et $k_2$ dans un second dictionnaire $C_2$, un indicateur de qualité de canal de large bande, $CQI_1$, et l'indicateur de qualité de canal de sous-bande, $CQI_2$, à partir d'un équipement d'utilisateur ;
dériver, par l'émetteur, un premier précodeur déterminé sur la base de l'indication de classement et des indices $n_1$, $k_1$ et $k_2$ reçus par l'émetteur ;
précoder, par l'émetteur, des données à envoyer à l'équipement utilisateur par le premier précodeur dérivé par l'émetteur ; et
envoyer, par l'émetteur, les données précodées par l'unité de précodage à l'équipement d'utilisateur ;
dans lequel le $CQI_1$ de large bande est associé au second précodeur représenté par les indices $n_1$, $k_1$, et le $CQI_2$ de sous-bande est associé au troisième précodeur représenté par les indices $n_1$, $k_2$, et dans lequel le second précodeur représente un précodeur de large bande, et le troisième précodeur représente un précodeur de sous-bande.

12. Procédé selon la revendication 11, dans lequel le second précodeur est déterminé par les indices $n_1$ et $k_1$ au niveau de l'émetteur comprend :

le second précodeur $W_1$ est déterminé comme $W_1 = W_{n_1}^{(1)} W_{k_1}^{(2)}$, où $W_{n_1}^{(1)}$ représente une matrice déterminée par l'indice $n_1$ dans le dictionnaire $C_1$, et $W_{k_1}^{(2)}$ représente une matrice déterminée par l'indice $k_1$ dans le dictionnaire $C_2$ ; et
dans lequel le troisième précodeur est déterminé par les indices $n_1$ et $k_2$ au niveau de l'émetteur comprend :
le troisième précodeur $W_2$ est déterminé comme $W_2 = W_{n_1}^{(1)} W_{k_2}^{(2)}$, où $W_{n_1}^{(1)}$ représente une matrice déterminée par l'indice $n_1$ dans le dictionnaire $C_1$, et $W_{k_2}^{(2)}$ représente une matrice déterminée par l'indice $k_2$ dans le dictionnaire $C_2$.

13. Procédé selon la revendication 11, dans lequel le second précodeur est déterminé par les indices $n_1$ et $k_1$ au niveau de l'émetteur comprend :

le second précodeur $W_1$ est déterminé comme $W_1 = W_{k_1}^{(2)} W_{n_1}^{(1)}$, où $W_{k_1}^{(2)}$ représente une

matrice déterminée par l'indice $k_1$ dans le dictionnaire $C_2$, et $W_{n_1}^{(1)}$ représente une matrice déterminée par l'indice $n_1$ dans le dictionnaire $C_1$ ; et

dans lequel le troisième précodeur est déterminé par les indices $n_1$ et $k_2$ au niveau de l'émetteur comprend :

le troisième précodeur $W_2$ est déterminé comme

$$W_2 = W_{k_2}^{(2)} W_{n_1}^{(1)},$$ où $W_{k_2}^{(2)}$ représente une matrice déterminée par l'indice $k_2$ dans le dictionnaire $C_2$, et $W_{n_1}^{(1)}$ représente une matrice déterminée par l'indice $n_1$ dans le dictionnaire $C_1$.

14. Système de précodage, comprenant :
un émetteur selon l'une quelconque des revendications 7 à 10 et un équipement d'utilisateur selon la revendication 6.

15. Produit de programme informatique, comprenant :
un support lisible par ordinateur comprenant :

un code pour amener au moins un ordinateur à obtenir un signal de référence à partir d'un émetteur ;

un code pour amener au moins un ordinateur à dériver une indication de classement, un indice de dictionnaire $n_1$ dans un premier dictionnaire $C_1$, des indices de dictionnaire $k_1$ et $k_2$ dans un second dictionnaire $C_2$, un indicateur de qualité de canal de large bande, CQI$_1$, et un indicateur de qualité de canal de sous-bande, CQI$_2$, sur la base du signal de référence, dans lequel le CQI$_1$ de large bande est associé à un second précodeur représenté par des indices $n_1, k_1$, et le CQI$_2$ de sous-bande est associé à un troisième précodeur représenté par des indices $n_1, k_2$, et dans lequel le second précodeur représente un précodeur de large bande, et le troisième précodeur représente un précodeur de sous-bande ;

un code pour amener au moins un ordinateur à envoyer l'indication de classement, l'indice de dictionnaire $n_1$ dans le premier dictionnaire $C_1$, les indices de dictionnaire $k_1$ et $k_2$ dans le second dictionnaire $C_2$, le CQI$_1$ de large bande et le CQI$_2$ de sous-bande à l'émetteur ; et

un code pour amener au moins un ordinateur à recevoir, à partir de l'émetteur, des données précodées par un premier précodeur déterminé par l'émetteur sur la base de l'indication de classement et des indices $n_1, k_1$ et $k_2$.

16. Produit de programme informatique, comprenant :
un support lisible par ordinateur comprenant :

un code pour amener au moins un ordinateur à recevoir une indication de classement, un indice de dictionnaire $n_1$ dans un premier dictionnaire $C_1$, des indices de dictionnaire $k_1$ et $k_2$ dans un second dictionnaire $C_2$, l'indicateur de qualité de canal de large bande, CQI$_1$, et l'indicateur de qualité de canal de sous-bande, CQI$_2$, à partir d'un équipement d'utilisateur ;

un code pour amener au moins un ordinateur à dériver un premier précodeur déterminé sur la base de l'indication de classement et des indices $n_1, k_1$ et $k_2$ reçus ;

un code pour amener au moins un ordinateur à précoder des données à envoyer à l'équipement d'utilisateur par le premier précodeur dérivé ; et

un code pour amener au moins un ordinateur à envoyer les données précodées à l'équipement d'utilisateur ; dans lequel le CQI$_1$ de large bande est associé au second précodeur représenté par les indices $n_1, k_1$, le CQI$_2$ de sous-bande est associé au troisième précodeur représenté par les indices $n_1, k_2$, et dans lequel le second précodeur représente un précodeur de large bande, et le troisième précodeur représente un précodeur de sous-bande.

obtaining a reference signal from a transmitter; — S201

deriving a rank indication, one codebook index $n_1$ in a first codebook $C_1$, two codebook indices $k_1$ and $k_2$ in a second codebook $C_2$, a wideband $CQI_1$ and a subband $CQI_2$, based on the obtained reference signal; — S202

sending at least one feedback message conveying the rank, the codebook index $n_1$ in a first codebook $C_1$, the two codebook indices $k_1$ and $k_2$ in a second codebook $C_2$, the wideband $CQI_1$ and the subband $CQI_2$, to the transmitter; — S203

receiving, from the transmitter, data precoded by a matrix derived based on the rank indication and the indices $n_1$, $k_1$ and $k_2$. — S204

Fig. 1

receiver feeds back a first message that contains the rank indication;

receiver feeds back a second message that contains the indices $n_1$ and $k_1$ and wideband $CQI_1$;

receiver feeds back a second message that contains the index $k_2$ and wideband $CQI_2$;

receiver receives, from the transmitter, data precoded by a matrix derived based on the rank indication and the indices $n_1$, $k_1$ and $k_2$.

Fig. 2

receiver sends a first message that contains the rank indication;

receiver sends a second message that contains the index $n_1$ and wideband $CQI_1$;

receiver sends a second feedback message that contains the index $k_2$ and wideband $CQI_2$;

receiver receives, from the transmitter, data precoded by a matrix derived based on the rank indication and the indices $n_1$, $k_1$ and fixed index $k_2$.

Fig. 3

1900

User Equipment

obtaining unit — 1901

deriving unit — 1902

sending unit — 1903

receiving unit — 1904

Fig. 4

Fig. 5

a transmitter receives a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment ⟿ 2101

the transmitter derives a first precoder determined based on the rank indication and the indices $n_1$, $k_1$ and $k_2$ received by the transmitter ⟿ 2102

the transmitter precodes the data to be sent to the user equipment by the first precoder derived by the transmitter ⟿ 2103

the transmitter sends the data precoded by the precoding unit to the user equipment. ⟿ 2104

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009096708 A1